# EUROPEAN PATENT APPLICATION

(11) **EP 3 453 777 A1**
(43) Date of publication of application: **13.03.2019**
(21) Application number: 18193223.7
(22) Date of filing: 07.09.2018
(51) Int. Cl.: C22C 38/00, C22C 38/02, C22C 38/04, C22C 38/24, C22C 38/60, F16C 7/02

(54) **HIGH STRENGTH AND FRACTURE SPLITTABLE MICRO ALLOYED STEEL**

(30) Priority: 08.09.2017 TR 201713280
(71) Applicant: Cemtas Celk Makina Sanayi Ve Ticaret Anonim Sirketi, Bursa (TR)
(72) Inventor: PARMAKSIZOGLU, BERTAN, BURSA (TR); DÜRGER, NURTEN BASAK, BURSA (TR); AYHAN, ISMAIL IRFAN, BURSA (TR)
(74) Representative: Yamankaradeniz, Kemal

(57) **Abstract**

The invention relates to steel alloys. The invention particularly relates to micro alloyed steel with tensile strength minimum 1150 MPa, yield strength minimum 720 MPa, % elongation minimum 6.5 % and % reduction of area minimum 10%, fracture splittable and composition by weight, 0.65-0.85% C (Carbon), 0.20-0.40% Si (Silicon), 0.60-1.50% Mn (Manganese), maximum 0.020% P (Phosphorus), 0.080-0.120% S (Sulphur), 0.30-0.80% Cr (Chromium), 0.10-0.15% V (Vanadium), maximum 0.010% Al (Aluminium) and N (Nitrogen).

## Description

### The Related Art

The invention relates to steel alloys. The invention particularly relates to micro alloyed steel with tensile strength minimum 1150 MPa, yield strength minimum 720 MPa, elongation minimum 6.5% and reduction of area minimum 10%, fracture splittable and by weight percentage 0.65-0.85 %C (Carbon), 0.20-0.40 %Si (Silicon), 0.60-1.50 %Mn (Manganese), maximum 0.020 %P (Phosphorus), 0.080-0.120 %S (Sulphur), 0.30-0.80 %Cr (Chromium), 0.10-0.15 %V (Vanadium), maximum 0.010 %Al (Aluminium) and N (Nitrogen).

### The State of Art

Engine parts consist of fixed parts such as engine block, cylinder head, cylinder head cover, intake manifold, exhaust manifold, and moving parts such as piston, connecting rod, crankshaft, eccentric shaft (camshaft), valves (intake and exhaust). Engine block contains parts such as piston, cylinder, connecting rod, crankshaft etc. Connecting rod is also known as piston rod. It is connected to piston through piston pin from top and to crankshaft through connecting housing from bottom. It transmits motion of piston to crankshaft during combustion and transmits pushing force of crankshaft to piston during compression. That is, it is the part connecting piston and crankshaft.

Connecting rods are generally produced from steel alloys by forging and are subjected to some processes to get the final shape. The connection part of the connecting rod to crankshaft is called "large end". Large end is produced as two parts in order to allow easy installation and dismantling from the crankshaft.

Today, it is expected that engines used in new generation diesel vehicles, especially passenger cars, will have a much longer life and high performance. In diesel engines, as an operating principle, air and fuel mixture are ignited automatically by the help of high pressure and temperature increase caused by it. Engine parts need to be made from materials having high strength so that engine mechanics stand high combustion pressure. Diesel engines producing high torque need higher strength steels for parts such as connecting rod. Studies concerning the enhancement of engine performance are continuously done throughout the world. In addition, nowadays when global warming becomes a serious threat, weight of vehicle has been attracting much more attention in connection with fuel consumption (CO₂ emission) in automotive industry. Today, still, 60% of vehicles' weight consist of parts produced from special steel grades. For that reason, development of steels having high mechanical properties increases engine performance while it also enables use of lighter design of connecting rods of engines. Automotive industry focuses on development of automobiles consuming less fuel but having higher security levels and lower cost production methods. Achievement of this will be provided by start of use of new materials allowing lighter and stronger applications for smarter designs continuously.

Steel is defined as an Iron - Carbon alloy containing Carbon up to 2%. Classification of steels are made according to production methods, places of use or processes. While steels can be classified as unalloyed, low alloyed, high alloyed and micro alloyed based on the production methods, they can be classified as constructional steels, case-hardening steels, spring steels, tool steels etc. also.

Micro alloyed steels contain elements such as Niobium (Nb), Titanium (Ti), Vanadium (V) and Aluminium (Al) which form carbides, nitrides or carbo-nitrides. Micro alloying elements have important effects on mechanical properties of steel. Contribution of carbides formed by alloying elements to precipitation hardening is related to type and size of precipitates.

### • Precipitation (precipitation hardening)

Micro alloying elements such as V, Ti, Nb and Al, precipitate as carbides, nitrides and carbo-nitrides depending on chemical composition and cooling rate after hot forming at austenitization temperatures. Such had structures precipitate in the grain or on the grain boundaries with various amounts and sizes at the point where their solubility ends. Precipitates which form during cooling of steel, block dislocations and provide increase in hardness and strength of the steel. Precipitation hardening mechanism increases strength of the steel. However, it may cause some decrease in toughness of the steel.

### • Grain refining

Carbides, nitrides and carbo - nitrides formed by micro alloying elements such as V, Ti, Nb and Al remains undissolved in the austenite phase if dissolution temperature is not exceeded during hot forming. Undissolved precipitates prevent growth of austenite grains and provide fine-grained steel structure as well as increase in toughness of the steel. This toughness increasing mechanism is not utilized because of the splittable feature of the steel.

Steel parts produced from micro alloyed steels may have many properties such as toughness at low temperatures, high strength, excellent weldability, etc.

Production of micro alloyed steel is made in four steps:
1. Micro alloying
2. Austenitization
3. Hot Forming
4. Controlled Cooling

In conventional methods, forged steel connecting rod is produced as a single part. Large end connecting to the crankshaft is cut by machining and splitted into two equal parts. These two equal parts are mounted to single part by drilling and screwing on the splitted surfaces. However, cut surfaces undergo a grinding operation again in order to provide full integrity of parts on mounting. This process is applied to be able to mount connecting rods to the crankshaft.

Fracture splitting technique eliminates cutting and machining steps applied for full matching of the surfaces formed on splitting. With this method, the bolt holes to be drilled on the large end can be made before splitting process. Thus, an excellent matching is provided between the separated parts after splitting.

Other advantages of producing connecting rod by fracture splitting method are no loss of material in comparison to machining, higher production rates due to single operation when compared to machining, considerable decrease in power consumption due to elimination of machining, decrease in consumption of machining tools.

The developments in the related art regarding the matter are as follows.

The patent numbered CA2666677A1 relates to "A steel and a processing method for higher-strength fracture-splittable machine components". The chemical composition of the steel in question (expressed in percent by weight) is as follows, 0.40-0.60% C (Carbon), 0.20-1.00% Si (Silicon), 0.50-1.50% Mn (Manganese), maximum 1.00 %Cr (Chromium), maximum 0.50 %Ni (Nickel), maximum 0.20 %Mo (Molybdenum), maximum 0.050 %Nb (Niobium), maximum 0.30 %V (Vanadium), maximum 0.05 %Al (Aluminium), 0.005-0.0200 %N (Nitrogen) and the rest being consisting of Iron and residual elements.

Patent numbered US7497361B2 discloses a process to split connecting rods.

Patent numbered US8152939B2 discloses a connecting rod, which contains, by weight, C: 0.25-0.35%, Si: 0.50-0.70%, Mn: 0.60-0.90%, P: 0.040-0.070%, S: 0.040-0.130%, Cr: 0.10-0.20%, V: 0.15-0.20%, Ti: 0.15-0.20% and N: 0.002-0.0200%, and the balance Fe.

The patent numbered US5135587A relates to a steel containing (by weight percent): 0.60-0.75 Carbon, 0.25-0.50 Manganese, 0.040-0.120 Sulphur and producing connecting rod from that steel.

Patent numbered US6143242A steel which contains, by weight percent, 0.20-0.35% of C, 0.1-1.1 % of Si, 0.1-0.3% of Mn, 0.01-0.2% of P, 0.01-0.2% of S, 0.2-0.5% of V, 0.01-0.1% of Ti, 0.005 to 0.020% of N and balance Fe.

Patent numbered US8715428B2 discloses a micro - alloyed steel that contains, by weight percent, C: 0.35 to 0.60%, Si: 0.50 to 2.50%, Mn: 0.20 to 2.00%, P: 0.010 to 0.150%, S: 0.040 to 0.150%, V: 0.10-0.50%, Zr: 0.0005 to 0.0050%, Ca: 0.0005 to 0.0050%, N: 0.0069 to 0.0200%, Al maximum 0.010%, and a balance of Fe.

Patent numbered EP1070153B1 relates to a steel composition containing, by weight, Carbon 0.60-0.65%, Silicon up to 0.40%, Manganese 0.60-0.90%, Phosphorus 0.030-0.070%, Sulphur 0.070-0.110%, Chromium up to 0.50%, Molybdenum up to 0.10%, Nickel up to 0.50%, Copper up to 0.50%, Aluminium up to 0.050%, Nitrogen up to 0.030%, Vanadium and Iron.

As seen in the patent applications mentioned above, there are several steel compositions known in the related art. However, steel alloys having higher values in comparison to current products in terms of mechanical properties such as yield strength, tensile strength, elongation and reduction of area are needed.

### Brief Description of the Invention

The present invention relates to a fracture splittable and high strength micro alloyed steel meeting all above requirements, eliminating all disadvantages and providing some additional advantages.

Main purpose of the invention is to provide obtaining micro alloyed steel properties having higher values in comparison to current products in terms of mechanical properties such as yield strength, tensile strength, elongation and reduction of area.

The invention aims to provide a micro alloyed steel with higher mechanical properties such as yield strength, tensile strength, elongation and reduction of area and with less cost in comparison to current products.

Another purpose of the invention is to develop a micro alloyed steel alternative to existing products in order to use in production of connecting rods.

The invention also aims to provide contribution to light weight of vehicles by use of micro alloyed steel developed for use in connecting rods production.

A further purpose of the invention is to obtain a micro alloyed steel alloy with high strength and fracture splittable for use at production of connecting rods for engines used in the automotive industry.

Another purpose of the invention is to obtain a high strength steel composition developed for connecting rods produced with hot forging and fracture splitting.

In order to achieve above described purposes, the invention is a micro alloyed steel containing, by weight percent, 0.65-0.85% C (Carbon), 0.20-0.40% Si (Silicon), 0.60-1.50% Mn (Manganese), maximum 0.020% P (Phosphorus), 0.080-0.120% S (Sulphur), 0.30-0.80% Cr (Chromium), 0.10-0.15% V (Vanadium), maximum 0.010% Al (Aluminium), and N (Nitrogen).

The structural, characteristic properties and all advantages of the invention will be understood better with detailed descriptions given below. Therefore, the assessment should be made with taking into account the detailed description.

### Brief Description of the Drawings

Figure - 1: Optical Microscope view of micro alloyed steel of invention in 100X magnification.
Figure - 2: Scanning Electron Microscope (SEM) view of micro alloyed steel of invention in 3000X magnification.
Figure - 3: Scanning Electron Microscope (SEM) view of micro alloyed steel of invention in 5000X magnification.

### Detailed Description of the Invention

In this detailed description, high strength and fracture splittable micro alloyed steel being subject of this invention and the preferred embodiments have been disclosed solely for better understanding of the subject and described in a manner not causing any restrictive effect.

The invention is a micro alloyed steel and it consists of C (Carbon), Si (Silicon), Mn (Manganese), P (Phosphorus), S (Sulphur), Cr (Chromium), V (Vanadium), Al (Aluminium), and N (Nitrogen). Furthermore, it consists of Fe (iron) in balance with other elements and trace amount of (in an amount not affecting mechanical properties of steel) other elements (Ni, Cu, Mo etc.). Compositional ranges of the micro alloyed steel of the invention are given in Table 1 below.

**Table 1: Micro alloyed steel composition.**

| Content | Preferred quantity by weight (%) |
|---|---|
| C (Carbon) | 0.65-0.85 |
| Si (Silicon) | 0.20-0.40 |
| Mn (Manganese) | 0.60-1.50 |
| P (Phosphorus) | ≤ 0.020 |
| S (Sulphur) | 0.080-0.120 |
| Cr (Chromium) | 0.30-0.80 |
| V (Vanadium) | 0.10-0.15 |
| Al (Aluminium) | ≤ 0.010 |
| N (Nitrogen) | - |

As seen in Table 1 above, the micro alloyed steel disclosed hereunder contains, (by weight percent), 0.65-0.85% C (Carbon), 0.20-0.40% Si (Silicon), 0.60-1.50% Mn (Manganese), maximum 0.020% P (Phosphorus), 0.080-0.120% S (Sulphur), 0.30-0.80% Cr (Chromium), 0.10-0.15% V (Vanadium), maximum 0.010% Al (Aluminium), and N (Nitrogen).

Micro alloyed steel grade of the invention is fracture splittable like 70MnVS4, C70S6 connecting rod steels.

### C: 0.65 - 0.85%

Carbon is the basic alloying element of the steel. It is the most important element increasing strength and hardness of the steel. When percent C increases, the pearlite ratio in the microstructure of steel increases and thus steel tensile and yield strength increases. Above 0.80% C, strength do not increase much. On the other hand, when percent Carbon increases, ductility and weldability of the steel decreases. The steel being subject of the invention has Carbon at range of 0.65-0.85% in order to provide high yield and tensile strength. When C percent is below 0.65, yield and tensile strength decreases. When C percent is higher than 0.85, strength increases but ductility decreases.

### Si: 0.20 - 0.40%

Silicon is one of the basic elements used as a deoxidizer in steel production. Silicon also dissolves in ferrite and increases ferrite strength. This develops fracture splittable feature of the steel. Since the steel of the invention is of pearlitic structure, Silicon amount is kept limited. Silicon does negatively affect machinability because of the increase in strength. Silicon also increases high temperature strength and this adversely affects the forgeability. Because of these, Silicon percentage should not exceed 0.40%.

### Mn: 0.60 - 1.50%

Manganese increases steel strength with solid solution hardening effect. Manganese decreases the distance between pearlite lamellae and causes increase in both strength and ductility. This can negatively affect fracture splittability feature of low Carbon steels. Manganese is also an element triggering bainite formation. With increase in Manganese, bainite formation in the structure becomes possible. This can also negatively affect fracture splittability feature of low Carbon steels. Manganese positively affects the hot formability of the steel. For that reason, the steel of the invention has minimum 0.60% Mn. Since more than 1.5% of Manganese content will increase the hardness, machinability will be negatively affected. For that reason, preferable range in the steel of the invention is 0.60-1.50%.

### P: max. 0.020%

It is an unwanted element in the steel mostly. Embrittlement can occur by segregation of Phosphorus to the grain boundaries. It is the element most effective in increasing the ferrite strength. For that reason, phosphorous at even low concentrations contributes to increasing strength and hardness of the steel, but decreases ductility and notch toughness in the transverse direction to the rolling. P value at the steel of the invention is max. 0.020%.

### S: 0.080 - 0.120%

Except steels for good machinability requirements, Sulphur is an undesired impurity in steel. For this reason amount of Sulphur in steel composition should be in low content. Increasing the Sulphur content lowers the transverse ductility and toughness and has little effects on the longitudinal mechanical properties. If Sulphur is not balanced with Manganese, it tends to cause hot shortness on the grain boundaries due to FeS formation. Sulphur is mostly in sulphide (MnS, CaS) and oxi-sulfide inclusion forms in the steel microstructure. In this invention, S content in new steel grade should be between 0.080-0.120% for good machinability.

### Cr: 0.30 - 0.80%

Chromium improves the strength of the steel similar with Manganese. 1% Chromium addition increase the tensile strength of steel about 80 - 100 MPa. Cr increases the hardenability of steel. Increasing Carbon content decreases ductility but this improves the fracture splittability of the steel. In this invention, Chromium content should not be less than 0.30% to provide the desired strength. High Chromium content may cause poor machinability due to increased hardness. For this reason, Chromium content should be maximum 0.80%.

### V: 0.10 - 0.15%

Vanadium is the most soluble micro alloying element in the steel. Therefore, it has weak effect on recrystallization temperature. On the other hand, Vanadium carbides revert to solid solution and ensure effective precipitation hardening during process (hot forming - controlled cooling). Yield strength increases due to increasing Vanadium content. However, Vanadium carbides completely dissolve above 1050 °C therefore; it has little effect on grain refinement and toughness. Vanadium content should not be less than 0.10% to ensure the desired strength.

### Al: max. 0.010%

It is the most effective deoxidizer in the steel. It controls grain growth and aging in heat treatment processes. It has grain refining effect in the steel. In this invention, to obtain good fracture splittability, Aluminium content in chemical composition is determined as maximum 0.010%. In other words, for the new steel grade fine grained microstructure and good toughness properties are not preferred. Other than mechanical properties, Aluminium has a negative effect in terms of continuous casting production. If Aluminium content in the liquid steel is high, Ca treatment will be required in the secondary metallurgical process. Because of 0.080-0.100% Sulphur content in the new steel grade composition, CaS inclusions can cause nozzle blockage and poor castability in continuous casting process.

It has multi functions; deoxidizer for steel production and micro alloying element for improved mechanical properties. Due to its high affinity to Nitrogen, it is used as nitride (AIN) former. This prevents austenite grain growth and speeds up austenite transformation. Aluminium shows its main effect in strong grain refining of ferrite.

### Nitrogen

It is important because Nitrogen is a nitride-forming element. Since increase in strength is provided with carbides in steel invented, N is not limited to a certain range.

Connecting rod transmits the linear motion of piston in the engine to the crankshaft and provides rotation of the shaft. In new generation diesel engines, higher strength is expected from the connecting rod material in line with stronger engine design and decrease of weight. Because of fracture splitting step in the connecting rod production process, the designed material is expected to be fracture splittable (without changing shape).

Steel disclosed under the invention composed of micro alloyed steel developed in order to meet the following mechanical properties for use in preferably connecting rods.
- Yield Strength ≥ 720 MPa
- Tensile Strength ≥ 1150 MPa
- Elongation ≥ 6.5%
- Reduction of Area ≥ 10%
- Fracture splittable

Steel disclosed under the invention takes part in the group of micro alloyed steels.

Micro alloyed steel production is described in general below.

In steelmaking plants, billet forms of steel are obtained by continuous casting process. Billets are hot rolled in order to produce round sectioned bars with desired diameter. After hot forming process, forged parts are cooled by either using controlled cooling tunnel or still air. Mechanical properties of the steel are obtained with precipitation hardening mechanism.

Steel alloy disclosed under invention developed for connecting rod show high strength values and fracture splittability.

Depending on amount of alloying elements and the size of the forged parts, the steel has tensile strength within a range of 1150-1275 MPa, yield strength of above 750 MPa, elongation of above 6.5% and reduction of area of above 10%.

In the steel grade invented hereunder, Manganese provides both increase in strength and an acceptable increment in ductility by reducing in interlamellar spacing of pearlite. Chromium and Vanadium increase the strength by forming carbides. It is possible to have 1250 MPa tensile strength with cooling in still air.

Micro alloyed steel disclosed under the invention has high strength and fracture splittable properties developed for using in connecting rods of vehicle engines in the automotive industry. In other words, it is a high strength steel composition developed for fracture splittable connecting rods produced with hot forging process.

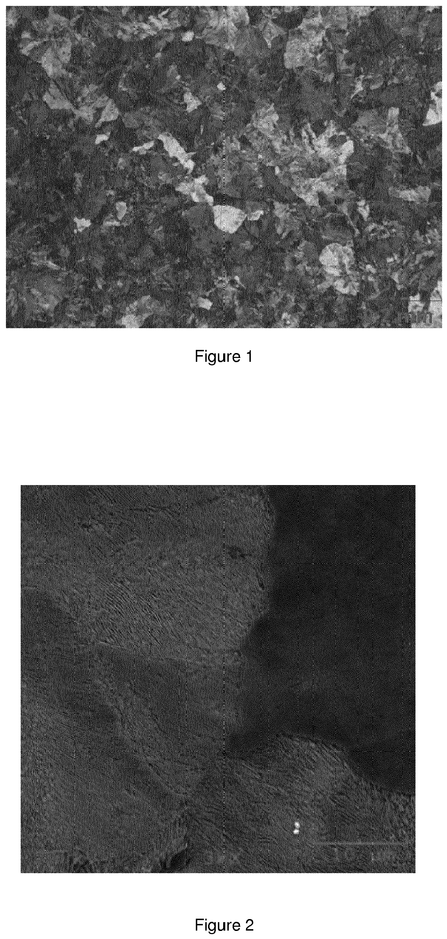

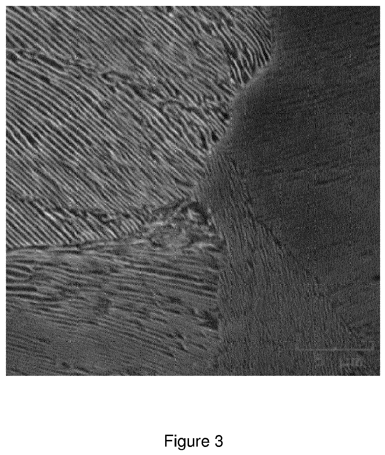

Microstructure of the steel invented hereunder consist of pearlite and sorbite (very fine-sized pearlite). Thus, microstructure of steel is 100% pearlite. In Fig. 1-3, light microscopy and electron microscopy images of the steel are shown.

Chemical compositions of the steel disclosed under the invention and conventional steel grades for connecting rods are given in Table 2.

**Table 2: Chemical composition of steel grades.**

| Chemical Composition (weight, %) | | | | | | | | | |
|---|---|---|---|---|---|---|---|---|---|
| No. | C | Si | Mn | P | S | Cr | V | Al | N |
| 1 | 0.81 | 0.27 | 1.00 | 0.008 | 0.080 | 0.63 | 0.12 | 0.007 | 0.0049 |
| 2 | 0.82 | 0.25 | 1.04 | 0.009 | 0.079 | 0.30 | 0.12 | 0.008 | 0.0041 |
| 3 | 0.82 | 0.22 | 0.57 | 0.008 | 0.081 | 0.59 | 0.12 | 0.006 | 0.0047 |
| 4 | 0.82 | 0.24 | 1.48 | 0.010 | 0.077 | 0.30 | 0.11 | 0.008 | 0.0060 |
| 5 | 0.82 | 0.24 | 1.98 | 0.011 | 0.080 | 0.30 | 0.11 | 0.009 | 0.0067 |
| 70MnVS4 | 0.73 | 0.23 | 0.86 | 0.010 | 0.080 | 0.14 | 0.12 | 0.005 | 0.0093 |
| C70S6 | 0.71 | 0.23 | 0.50 | 0.019 | 0.068 | 0.14 | 0.03 | 0.006 | 0.0098 |

15 kg capacity induction melting furnace was used to produce 80x80x180 mm sized steel ingots that have chemical composition in Table 2. Steel ingots were deformed into cylindrical bars having 40 mm diameter and 145 mm length by using hydraulic press. Cylindrical bars were forged into draft forms of connecting rods that have 20 mm diameter after heating to 1250 °C by induction furnace. Forged samples were cooled in still air. All steel grades had pearlitic microstructure after cooling. Mechanical testing samples were obtained from draft forms of the samples.

Mechanical test results of steel samples are given in Table 3.

**Table 3: Mechanical test results.**

| No. | Operation | Cooling rate (°C/s) | Tensile Strength (MPa) | Yield Strength (MPa) | Reduction of Area (%) | Elongation (%) |
|---|---|---|---|---|---|---|
| 1 | After forging | 1 | 1272 | 850 | 21 | 10.1 |
| 2 | After forging | 1 | 1166 | 745 | 18 | 15 |
| 3 | After forging | 1 | 1171 | 747 | 5 | 6.6 |
| 4 | After forging | 1 | 1282 | 924 | 17 | 7 |
| 5 | After forging | 1 | 1374 | 931 | 5 | 7.4 |
| 70MnVS4 | After forging | 1 | 1000-1150 | 650 | 20 | 10 |
| C70S6 | After forging | 1 | 950 | 550 | 30 | 10 |

It is shown in Table 3 that new steel grades invented hereunder give higher strength and acceptable ductility values when compared with 70MnVS4 and C70S6 grades that are conventionally used in connecting rods. In steel No.1, tensile and yield strength are 1272 MPa and 850 MPa, elongation and reduction of area are 10.1% and 21.0%, respectively. For these steel grades, Mn and Cr elements are effective in increasing strength values. When compared to 70MnVS4, the new steel grades invented hereunder have higher C, Mn and Cr in composition that result increasing in strength. Mn and Cr elements in solid solution provide decreasing in interlamellar spacing of pearlite and keeping ductility at same level. Despite increase in strength, 10.1% elongation is observed. In steel No.2, reducing Cr element to 0.3% results a certain amount of decrease in strength and an increase in ductility. When compared to 70MnVS4, it is seen that steel No.2 has still higher strength and similar ductility values. Higher amount of Mn and Cr elements in composition provide a thinner microstructure and despite increase in strength, ductility remains at the same value. It is seen that up to 1.5% Mn in composition provide increase in strength within acceptable ductility values, the ductility dramatically decrease when Mn content is above 1.5%. Thus, Mn content in composition is to be limited to 1.5%.

## Claims

1. A micro alloyed steel **characterized in** comprising; chemical composition of 0.65-0.85% C (Carbon), 0.20-0.40% Si (Silicon), 0.60-1.50% Mn (Manganese), max. 0.020% P (Phosphorus), 0.080-0.120% S (Sulphur), 0.30-0.80% Cr (Chromium), 0.10-0.15% V (Vanadium), max. 0.010% Al (Aluminium) and N (Nitrogen) by weight.

2. A micro alloyed steel according to claim 1, **characterized in that**; said micro alloyed steel is fracture splittable.

3. A micro alloyed steel according to claim 1, **characterized in that**; it is a steel used in connecting rods of vehicle engines.
